# EUROPEAN PATENT APPLICATION

(11) **EP 2 842 445 A2**
(43) Date of publication of application: **04.03.2015**
(21) Application number: 14183153.7
(22) Date of filing: 02.09.2014
(51) Int. Cl.: A43B 13/02, A43B 13/04, A43B 13/38, A43B 13/41, A43B 17/00, B29D 35/14

(54) **Method of manufacturing shoe insoles and shoe insole**

(30) Priority: 03.09.2013 CN 201310393101; 20.08.2014 CN 201410410966
(71) Applicant: Xu, Zhenhuan, Lingchuan County, Guangxi (CN)
(72) Inventor: Xu, Zhenhuan, Lingchuan County, Guangxi (CN)
(74) Representative: Karakatsanis, Georgios

(57) **Abstract**

A method of manufacturing shoe insoles, comprises steps of: step 1' making a resin mixture by mixing a resin and a hardening agent in a container; step 2, impregnating a glass fiber cloth with the resin mixture in step 1; step 3, cutting the glass fiber cloth impregnated in step 2 according to a pre-determined shape of a half insole or of an insole; step 4, hot-press forming a product by adding the glass fiber cloth cut in step 3 to a pre-heated mold, and heat pressing the glass fiber cloth to obtain the product of a shoe insole. A shoe insole manufactured according to the above method and a shoe comprising the same are also disclosed, involving high strengths, small thicknesses, light weights, resistances to moisture as well as hydrolysis, longtime molding effects, a strong weatherability and a good balance, and facilitating the standardization of shoe manufacturing.

## Description

### Technical Field

The present invention relates to the technical field of shoe manufacturing, particularly to a method of manufacturing shoe insoles. A shoe insole manufactured according to the method and a shoe with the same are also related in the present invention.

### Background Art

General shoe sole includes insoles and outsoles, wherein the insole is a layer of material located on the outsole, as shown in disclosed descriptions of a Chinese patent application with application No.200410026765 that a shoe insole manufacturing method is disclosed therein with a technical solution as follows: firstly, a middle part is manufactured; secondly, the middle part already manufactured is to be placed in center of a shoe insole mold, and mold space outside of the middle part is to be filled with PU materials by way of injection molding so as to form an outer margin, and via injection molding, the outer margin and the middle part get connected as a whole; and finally, an insole is completed and can be released out from the mold. The above-mentioned middle part is made through foaming EVA materials which are cutting molded, or through cutting flatten formed coconut fiber pads into shape exactly.

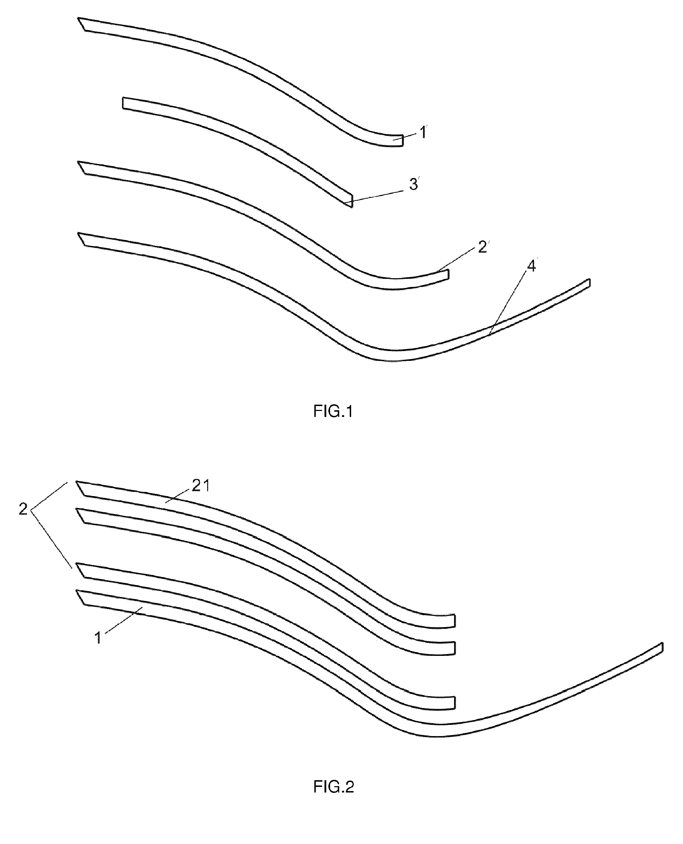

However, conventional shoe insoles are generally paper-based, and as shown in Fig.1, a sectional breakdown structure view of a conventional shoe insole, the shoe insole is made through pressing a 14mm wide steel core layer with two layers of paper material respectively attached on two sides of the steal core layer. Herein, the conventional shoe insole generally includes two layers of red paperboards 1, 2; after glue applying, a steel core layer 3' is added and adheredbetween the two layers of red paperboards 1, 2; and finally s soft paperboard 4 is attached onto the layer 2. This kind of shoe insole is generally called 'four-in-one or five-in-one stereotype insole'.

The above-mentioned shoe insole comprises disadvantages as follows.
1. With the paper-based material, the conventional stereotype insole is easy to get dampened and softened, as well as to get damaged by water, thus causing losses of molding and supporting effects.
2. The conventional stereotype insole comprises only one 14mm wide steal core layer for supporting, and accordingly, it's difficult to keep an overall balance upon the whole foot bottom.
3. For the paper-based material of the conventional stereotype insole, the thickness and weight of the completed insole are difficult to reduce, thus contrarily influencing the wearing comforts and the appearance of the shoe.
4. The conventional stereotype insole is fixed by glue and then by press forming, thus cannot fit exactly with shoe molds, and may influence the standardization and normalization of shoe batch production, causing growth of fraction defective.

### Disclosure of the Invention

Due to the disadvantages of the conventional shoe insole and manufacturing method thereof, an objective of present invention is to provide a method of manufacturing shoe insole, a shoe insole and a shoe with the same, which enjoy a high strength of products, and a thickness as well as a weight which are only 2/3 of the conventional ones, resistances to moisture as well as hydrolysis, longtime molding effects, a strong weatherability that can maintain performances at temperature from -30°C to-50°C, and an improved balance effect for the integral plate structure can help to support foot bottom, and also facilitate the standardization of shoe manufacturing.

In one aspect, to realize the objective of the present invention, a method of manufacturing shoe insoles is provided, comprising steps as follows:
step 1, stirring a resin mixture, wherein, the resin mixture includes resin, 0.1%-80% of hardening agent, 1%-30% of low shrinkage agent, 0.5%-10% of thickening agent and 0.5%-10% of releasing agent, the resin is any of unsaturated resin, epoxy resin, vinyl resin and phenolic resin, and the resin is stirred to mixed with the above-mentioned agents in a container;
step 2, impregnating a glass fiber cloth by saturating the glass fiber cloth with the resin mixture stirred in step 1 ;
step 3, trimming the glass fiber cloth by cutting the glass fiber cloth impregnated in step 2 according to a pre-determined shape of a half insole or of an insole;
step 4, hot-press forming a product by adding the glass fiber cloth cut in step 3 to a pre-heated mold, and heat pressing the glass fiber cloth cut in step 3 to obtain the product of a shoe insole.

To reduce costs, in another aspect of the invention, another method of manufacturing shoe insoles is also provided, including steps of: step 1^{,} stirring a resin mixture by mixing a resin and a hardening agent in a container; step 2, impregnating a glass fiber cloth by saturating the glass fiber cloth with the resin mixture stirred in step 1; step 3, trimming the glass fiber cloth by cutting the glass fiber cloth impregnated in step 2 according to a pre-determined shape of a half insole or of an insole ^{,} cleaving a paperboard, and inserting the already cut glass fiber cloth into the paperboard; step 4, hot-press forming a product by adding the paperboard in step 3 to a pre-heated mold, and heat pressing the paperboard to obtain the product of a shoe insole. Generally, the shoe insole is in shape of a flat shape of the bottom of a shoe mold or a last for shaping a shoe. A half insole is a part of the shape of a shoe insole, and can obtained by cutting on the base of the shoe insole referring to a pre-determined length or width, according to specific requirements on molding and balance.

In various embodiments according to the present invention, the method of manufacturing shoe insole also includes step 5, burrs removing, via a rubbing device to remove burrs.

In additional embodiments according to the present invention, the glass fiber cloth of step 2 includes any of glass fiber cloth woven roving, single direction glass fiber cloth, twill glass fiber cloth, and tricot-knitted glass fiber cloth.

In additional embodiments according to the present invention, the glass fiber cloth of step 2 is glass fiber cloth woven roving with an areal density of 200 g/m2-1200g/m2.

In additional embodiments according to the present invention, the glass fiber cloth of step 3 has a multilayered composite structure.

In additional embodiments according to the present invention, the mold of step 4 has a pre-heating temperature of 100-108°C, a heating pressure of 10-180 kg/cm2, and a heat pressing time of 80-240s, and in step 4, the glass fiber cloth cut in step 3 and a soft midsole are heat pressed.

In another aspect according to the present invention, a shoe insole manufactured according to any of above-mentioned method is also provided, wherein, the shoe insole includes a clove paperboard with a glass fiber cloth impregnated by resin mixture inserted therein, and the shoe insole is obtained by heat pressing the paperboard and the a glass fiber cloth.

The present invention possesses advantages and beneficial effects as follows: the method of manufacturing shoe insole is achieved by adoption of molding thermosetting processing, so as a thermosetting product of resin and fiber, the product enjoys a high strength, a thickness as well as a weight which are only 2/3 of the conventional ones, resistances to moisture as well as hydrolysis, longtime molding effects, a strong weatherability that can maintain performances at temperature from -30°C to-50°C, and an improved balance effect for the integral plate structure can help to support foot bottom; a the product can also exactly fit with the shoe mold and the shoe last for the molding technic, thus facilitating the standardization of shoe manufacturing and the stuff operation.

### Brief Description of Drawings

Fig.1 schematically shows a sectional break-down structure of a conventional shoe insole.
Fig.2 schematically shows a sectional break-down structure of a shoe insole of the present invention;
Fig.3 schematically shows a structure of a further shoe insole of the present invention.

### Best Mode for Carrying out the Invention

To further illustrate the principle and structure of the present invention, these and other advantage, aspect and novel features of the present invention, as well as details of an illustrated embodiment thereof, will be more fully understand from the following description and drawings. Accordingly, the scope of various aspects of the present invention should not be limited by the embodiments.

In one embodiment of the present invention, a method of manufacturing shoe insoles is provided, comprising steps of: step 1, stirring a resin mixture by mixing a resin and a hardening agent in a container; step 2, impregnating a glass fiber cloth by saturating the glass fiber cloth with the resin mixture already stirred in step 1; step 3, trimming the glass fiber cloth by cutting the glass fiber cloth already impregnated in step 2 according to a pre-determined shape of a half insole or of an insole; and step 4, hot-press forming a product by adding the glass fiber cloth cut in step 3 to a pre-heated mold, and heat pressing the glass fiber cloth cut in step 3 to obtain the product of a shoe insole.

Advantageously, according to the present invention, the method of manufacturing shoe insole also includes step 5, burrs removing, via a rubbing device to remove burrs.

Advantageously, according to the present invention, in step 1, the resin is any of unsaturated resin, epoxy resin, vinyl resin and phenolic resin.

Advantageously, according to the present invention, in step 1, the proportion of the hardening agent in the resin mixture is 0.1%-80%.

Advantageously, according to the present invention, in step 1, the resin mixture also includes a low shrinkage agent, and the proportion of the low shrinkage agent in the resin mixture is 1%-30%.

Advantageously, according to the present invention, in step 1, the resin mixture also includes a thickening agent, and the proportion of the thickening agent in the resin mixture is 0.5%-10%.

Advantageously, according to the present invention, in step 1, the resin mixture also includes a releasing agent, and the proportion of the releasing agent in the resin mixture is 0.5%-10%.

Advantageously, according to the present invention, in step 1, the resin mixture comprises resin, 0.1%-80% of hardening agent, 1%-30% of low shrinkage agent, 0.5%-10% of thickening agent and 0.5%-10% of releasing agent.

Advantageously, according to the present invention, the glass fiber cloth of step 2 includes any of glass fiber cloth woven roving, single direction glass fiber cloth, twill glass fiber cloth, and tricot-knitted glass fiber cloth.

Advantageously, according to the present invention, the glass fiber cloth of step 2 is glass fiber cloth woven roving with a areal density of 200 g/m2-1200g/m2.

Advantageously, according to the present invention, the glass fiber cloth of step 3 has a multilayered composite structure.

Advantageously, according to the present invention, the mold of step 4 is provided with a pre-heating temperature of 100-108°C, a heating pressure of 10-180 kg/cm2, and a heat pressing time of 80-240s, and in step 4, the glass fiber cloth cut in step 3 and a soft midsole are heat pressed.

As shown in Fig.2, a shoe insole is also provided, and the shoe insole is manufactured according to any of above-mentioned methods. The shoe insole includes a soft midsole 1 and a glass fiber layer-on-layer molded midsole 2 configured on upper side of the soft midsole, wherein the glass fiber layer-on-layer molded midsole 2 is manufactured through heat pressing a plurality layers of glass fiber cloth 21 impregnated by the resin mixture.

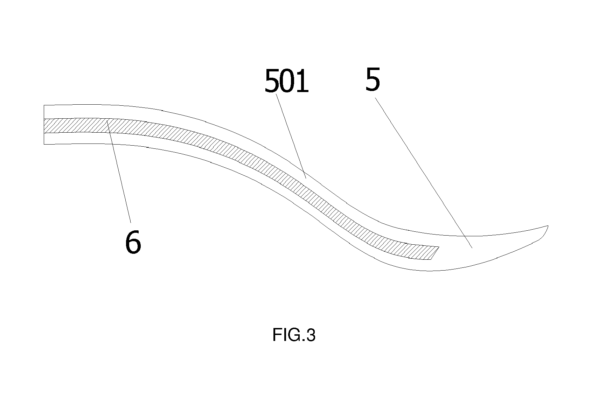

As shown in Fig.3, a further structure of the shoe insole according to the present invention is also provided. In this case, the shoe insole comprises a paperboard 5 or a cloth board, and the shoe insole is obtained in such a way that: a fore part of the paperboard stays the same, while a back part 501, the rest part of the paperboard except the fore part, is cleaved; a lass fiber cloth 6 which has been impregnated with the resin mixture, is inserted into the cleaved back part 501 of the paperboard; and finally a process of heat pressing is carried out. The shoe insole with this structure has a merit of cost reduction.

Optionally, the shoe insole also can be manufactured in such a way as explained below. Similar to the above-mentioned structure that only a fore part of the paperboard is not cleaved, two pieces of cloth are partially bonded together, particularly at a former portion of the cloth; a lass fiber cloth which has been impregnated with the resin mixture, is inserted into the un-bonded part between those two pieces of cloth; and finally a process of heat pressing is carried out

The present invention possesses advantages and beneficial effects as follows: the method of manufacturing shoe insole is achieved by adoption of molding thermosetting processing, so as a thermosetting product of resin and fiber, the product enjoys a high strength, a thickness as well as a weight which are only 2/3 of the conventional ones, resistances to moisture as well as hydrolysis, longtime molding effects, a strong weatherability that can maintain performances at temperature from -30°C to-50°C, and an improved balance effect for the integral plate structure can help to support foot bottom; and the product can also exactly fit with the shoe mold and the shoe last for the molding technic, thus facilitating the standardization of shoe manufacturing and the stuff operation.

While the present invention has been described with reference to preferred embodiments, it will be understood by those skilled in the art that various changes may be made and equivalents may be substituted without departing from the scope of the present invention. But all the changes and equivalents will be included within the scope of the appended claims.

## Claims

1. A method of manufacturing shoe insoles ^{,} wherein, the method comprises steps as follows.
step 1, stirring a resin mixture, wherein, the resin mixture includes resin, 0.1%-80% of hardening agent, 1%-30% of low shrinkage agent, 0.5%-10% of thickening agent and 0.5%-10% of releasing agent, the resin is any of unsaturated resin, epoxy resin, vinyl resin and phenolic resin, and the resin is stirred to mixed with the hardening agent, low shrinkage agent, thickening agent and releasing agent in a container;
step 2, impregnating a glass fiber cloth by saturating the glass fiber cloth with the resin mixture stirred in step 1;
step 3, trimming the glass fiber cloth by cutting the glass fiber cloth impregnated in step 2 according to a pre-determined shape of a half insole or of an insole; step 4, hot-press forming a product by adding the glass fiber cloth cut in step 3 to a pre-heated mold, and heat pressing the glass fiber cloth cut in step 3 to obtain the product of a shoe insole.

2. The method of manufacturing shoe insoles according to claim 1, wherein, the method also includes step 5, burrs removing, via a rubbing device to remove burrs.

3. The method of manufacturing shoe insoles according to claim 1, wherein, the glass fiber cloth of step 2 includes any of glass fiber cloth woven roving, single direction glass fiber cloth, twill glass fiber cloth, and tricot-knitted glass fiber cloth.

4. The method of manufacturing shoe insoles according to claim 1, wherein, the glass fiber cloth of step 2 is glass fiber cloth woven roving with a areal density of 200 g/m2-1200g/m2

5. The method of manufacturing shoe insoles according to claim 1, wherein, the glass fiber cloth of step 3 has a multilayered composite structure.

6. The method of manufacturing shoe insoles according to claim 1, wherein, the mold of step 4 is provided with a pre-heating temperature of 100-108°C, a heating pressure of 10-180 kg/cm2, and a heat pressing time of 80-240s, and in step 4, the glass fiber cloth cut in step 3 and a soft midsole are heat pressed.

7. A shoe insole, wherein, the shoe insole is manufactured according to any of claims 1-6, the shoe insole includes a soft midsole and a glass fiber layer-on-layer molded midsole configured on a upper side of the soft midsole, and herein the glass fiber layer-on-layer molded midsole is manufactured through heat pressing a plurality layers of glass fiber cloth impregnated by the resin mixture.

8. A method of manufacturing shoe insoles, wherein the method comprises steps of:
step 1 ^{,} stirring a resin mixture, wherein, the resin mixture includes materials of resin which is any of unsaturated resin, epoxy resin, vinyl resin and phenolic resin, and also includes 0.1%-80% of hardening agent, 1%-30% of low shrinkage agent, 0.5%-10% of thickening agent and 0.5%-10% of releasing agent; and all the materials are stirred to mixed together in a container;
step 2, impregnating a glass fiber cloth by saturating the glass fiber cloth with the resin mixture already stirred in step 1;
step 3, trimming the glass fiber cloth already impregnated in step 2 according to a pre-determined shape of a half insole or of an insole ^{,} cleaving a back part of a paperboard or of a cloth board, and sandwiching the already cut glass fiber cloth into the cleaved paperboard or into cloth board;
step 4, hot-press forming a product by adding the paperboard or the cloth board of step 3 into a pre-heated mold, which is provided with a pre-heating temperature of 100-108°C, a heating pressure of 10-180 kg/cm2, and a heat pressing time of 80-240s;
step 5, burrs removing, via a rubbing device to remove burrs so as to obtain a product of the shoe insole;
and herein, the glass fiber cloth of step 2 includes any of glass fiber cloth woven roving, single direction glass fiber cloth, twill glass fiber cloth, and tricot-knitted glass fiber cloth.

9. A shoe insole, wherein, the shoe insole comprises a paperboard or a cloth board, and the shoe insole is obtained in such a way that: except a fore part of the paperboard, the paperboard or the cloth board is cleaved at a back part, the rest part of the paperboard, is cleaved; a lass fiber cloth which has been impregnated with a resin mixture, is inserted into the cleaved back part; and finally a process of heat pressing is carried out.

10. A shoe insole, wherein, the shoe insole comprises two pieces of cloth, a fore portion of the two pieces of cloth is bonded together, a glass fiber cloth impregnated by resin mixture is inserted into and sandwiched between unbounded part of the two pieces of cloth, and the shoe insole is obtained by heat pressing the two pieces of cloth and the a glass fiber cloth.
